# EUROPEAN PATENT SPECIFICATION

(11) **EP 3 999 274 B1**
(45) Date of publication and mention of the grant of the patent: **18.09.2024**
(21) Application number: 20745297.0
(22) Date of filing: 07.07.2020
(51) Int. Cl.: G05B 19/404

(54) **METHOD FOR SUPPRESSING THE PHENOMENON OF CHATTER IN A MACHINE TOOL**
VERFAHREN ZUR UNTERDRÜCKUNG VON RATTERERSCHEINUNGEN BEI EINER WERKZEUGMASCHINE
PROCÉDÉ DE SUPPRESSION DU PHÉNOMÈNE DE BROUTAGE DANS UNE MACHINE-OUTIL

(30) Priority: 17.07.2019 IT 201900012186; 17.07.2019 IT 201900012192; 17.07.2019 IT 201900012195
(43) Date of publication of application: 25.05.2022
(73) Proprietor: PAMA S.P.A., 38068 Rovereto (TN) (IT)
(72) Inventor: NAINER, Alberto, 38123 Trento (IT); DEFANT, Fabrizio, 38123 Trento (IT)
(74) Representative: Luppi Intellectual Property S.r.l.
(86) International application number: PCT/IB2020/056377
(87) International publication number: WO 2021/009617

(56) References cited:
- EP-A1- 0 665 074
- WO-A1-2008/041257
- DE-A1- 102016 203 597
- JP-A- 2014 237 208
- US-A- 5 315 526
- US-A1- 2004 057 639

## Description

The present invention relates to a method for suppressing the phenomenon of chatter in a machine tool, in particular, but not only, in machine tools provided with boring bars.

The term "chatter" means the occurrence of harmful vibrations during machining of a workpiece, which adversely affect machining quality, in particular in the case of precision machining tasks, the productivity of the machine tool, and can damage the mechanical parts of the machine tool.

The phenomenon of "chatter" depends on the dynamic performance of the machine tool and on the machining parameters.

Different techniques are known for reducing or eliminating the phenomenon of "chatter" in a machine tool:
- off-line strategies
- in-process strategies
- passive techniques
- active techniques

The off-line strategies aim to optimize the machining parameters of the machine tool, such as cutting speed, advancement, the type of tool used, the cutting depth, in order to use the machine at maximum performance. The mathematical methods used in these off-line strategies, require the so-called lobe diagrams to be estimated, which are stability maps of the machine tool, depending on the cutting speed function and cutting depth, for certain set values of the other constant parameters. The aforesaid off-line strategies require a detailed knowledge of the dynamic performance of the machine tool and the control of all the parameters that affect the reliability of the estimate of the aforesaid set values.

The in-process strategies aim to modify machining parameters and/or dynamics that are significant for the stability of the machine tool, when the phenomenon of "chatter" is identified by suitable sensors. These are more evolved and effective techniques because they do not require prior knowledge of the particular task to be performed.

The passive techniques aim to optimize the dynamic performance of the machine tool in the design phase, owing to the use of advanced design techniques and innovative materials. The object consists of maximizing the dynamic stiffness on the spindle, increasing damping and minimizing mass.

The active techniques are the natural evolution of the passive techniques, but the dynamic parameters are optimized by actuators driven by suitable control laws. Applications have been marketed for applications on machine tools.

As far as the so-called "in-process" strategies are concerned, "Spindle Speed Variation", i.e. the variation of spindle speed, and "Stiffness Variation" i.e. the variation of the stiffness of the system are very promising. Both techniques can operate according to two principles:
- discrete variation, which enables machining to be returned to stable mode, owing to the modification of the cutting speed or the stiffness of the system;
- periodic continuous variation, which varies according to a periodic law the cutting speed or the dynamics of the machine. In this manner, during machining, there are periods of stability and instability. When the period of stability is sufficiently long to dissipate the energy accumulated during the unstable period and the duration of the period of instability is sufficiently short to limit the amplitude of the oscillations, machining remains stable. Accordingly, this variation enables machine productivity to be increased.

In the case of boring bars, studies have been conducted to vary discretely the stiffness thereof by magnetorheological or electrorheological fluids when the machining becomes unstable.

Other studies have been conducted to vary periodically the stiffness of a boring bar by a magnetorheological fluid.

The possibility of varying the radial stiffness of the spindle of a machine tool by piezoelectric actuators has also been studied.

WO2008/041257 discloses a device for detecting the thermal deformation of a spindle of a machine-tool. The machine tool comprises a spindle carrier and a spindle. The device comprises a spindle carrier cover associable at the front to the spindle carrier for covering, at least partly, the spindle carrier opening allowing in any case the shifting of the spindle, and detection means fixed to the spindle carrier cover. The detection means are suitable for detecting the position of the signalling element of the spindle for measuring the hot deformation of said spindle in said retracted position.

US5315526 discloses a numerically controlled lathe capable of machining a workpiece by numerically controlling a machining table provided with a machining tool. In order to prevent a local uneven abrasion of parts, which make a sliding contact, due to a mass production of workpieces having a simple form or a machining in a non-circular shape, there are provided a main carriage and a sub carriage. A machining tool is positioned on the sub carriage, and the sub carriage traverses on the main carriage along an axis which the main carriage and the sub carriage have in common. When a circular machining is carried out, the main carriage and the sub carriage respectively traverse by an equal amount in directions opposite to each other, and the cutting tool is constantly maintained at a position designated by an instruction. At the time of a non-circular machining, the main carriage and the sub carriage respectively traverse in directions opposite to each other; moreover, the sub carriage rapidly traverses in response to an instruction designating a location of the tool. Thus parts which make a sliding contact are evenly worn out by shifting the relative positions of both the main and sub carriages.

DE102016203597 discloses a machine tool which includes a spindle retaining a tool, a spindle motor, a feed device relatively moving a workpiece and a tool with a feed motor, a spindle motor control unit, and a feed motor control unit. The spindle motor control unit continuously varies a rotational speed of the spindle in a periodic or non-periodic manner with a predetermined amplitude with respect to a target rotational speed. The feed motor control unit controls the feed motor in synchronization with the control of the spindle motor to continuously vary a relative moving speed between the tool and the workpiece such that a ratio of the rotational speed of the spindle to the moving speed does not become constant at least in a predetermined time zone in which a spindle speed reaches a maximal value and a predetermined time zone in which the spindle speed reaches a minimal value.

EP0665074 discloses a spindle arrangement in a machine tool which includes a movable support on a column or cross beam and a displaceably arranged spindle beam in the support. A spindle is rotatably located in the spindle beam. Coaxial to the spindle in the spindle beam and coupled to the spindle is a gear. Coaxial to the spindle and the gear in the spindle beam is a drive motor coupled to the gear. A cooling circuit is provided at least for the spindle. The gear is a planetary gear. The cooling circuit comprises a coolant channel system arranged around the spindle with a coolant feed in the area of the spindle head and a coolant outlet in the area of the spindle end.

US2004057639 discloses a method and an apparatus for vibration damping in a machine tool comprising at least one hydrostatic guide including at least one pocket for supporting a first component on a second component, through which an oil flow is passed with a predetermined volume flow and at a predetermined pressure and exits through at least one gap, wherein the oil flow through the gap is regulated in response to the loads arising so as to achieve a constant width of the gap.

One object of the present invention is to provide a method for varying periodically, simply and effectively the stiffness of a system for machining workpieces by removal of chips, in order to suppress the phenomenon of "chatter" during machining of a workpiece.

Another object of the present invention is to obtain the variation of the stiffness of the system without having to resort to the use of magnetorheological or electrorheological fluids, or to the use of piezoelectric actuators.

The objects of the present invention are achieved by a method for varying the stiffness of a system for machining workpieces by removing chips according to one of the independent claims.

Owing to the invention it is possible to obtain simply and effectively the suppression of the phenomenon of "chatter" during machining of a workpiece in a machine tool by removal of chips, by making machining stable without having to intervene on the machining parameters, such as for example cutting speed and cutting depth, obtaining high machining quality and increasing productivity of the machine tool.

Further advantages and features of the invention can be gleaned from the following description provided merely by way of non-limiting example, with reference to the attached drawings, in which:
Figures 1 to 3 illustrate schematically a first embodiment of the invention;
Figures 4 to 9 illustrate schematically a second embodiment of the invention and
Figures 10 to 12 illustrate a third embodiment of the invention.

According to the present invention, the suppression of chatter is obtained by varying periodically the stiffness of the machine tool during machining of a workpiece, according to a law of preset variation, between a maximum value and a minimum value in a preset interval of time, i.e. in a period. The stiffness is varied as explained in greater detail below, by interpolating displacements along two axes of the machine tool so as to maintain unvaried the position of the tool during machining of a workpiece, or by varying the stiffness of hydrostatic shoe bearings of the machine by varying the fluid supply pressure to the shoe bearings, or by varying the capillary resistance of the supply circuit of hydrostatic shoe bearings.

The main parameters of the aforesaid law of variation are the form of the function, which discloses how stiffness varies in each period; the frequency, i.e. the number of variation periods of the stiffness in the unit of time and the amplitude of the variation of the stiffness, i.e. the difference between the maximum and the minimum stiffness value in the period.

From a purely theoretical point of view, the form of function that would ensure most effective suppression of the phenomenon of "chatter" would be a square wave, i.e. a stiffness step variation between a maximum value maintained for a first half of each period and a minimum value maintained for a second half of the period.

However, in practice it is not possible to obtain the aforesaid waveform, but waveforms that are more or less rounded can be obtained, for example waveforms that approximate a sine wave.

The frequency of variation of the stiffness is linked to the frequency at which the cutting edges of the tool come into contact with the surface of the workpiece to be machined. If the tool has a number n of cutting edges and rotates at a rotation speed equal to m rpm, the contact frequency f of the cutting edges with the workpiece will be equal to f = m/60*n Hz.

Preferably, the frequency of variation of the stiffness has to be less than the frequency at which the cutting edges of the tool come into contact with the surface of the workpiece to be machined and is limited, as a maximum value, by the dynamics of the system used.

The amplitude of variation of the stiffness is substantially inversely proportional to the frequency, in the sense that the greater the frequency of variation, the less is the maximum size of variation that it is possible to achieve because of the dynamic limits of the system used.

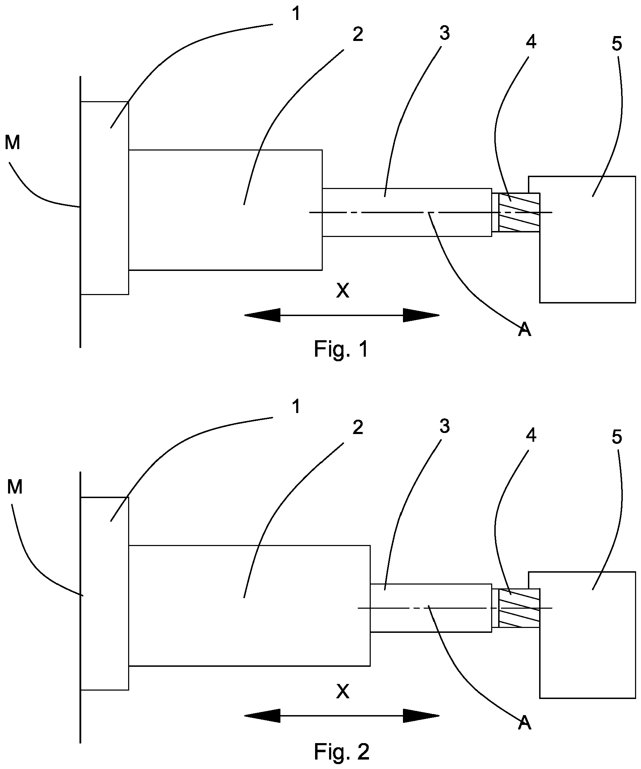

In Figure 1, a machine tool is illustrated schematically in which suppression of the "chatter" phenomenon is obtained by interpolating motions along two machine axes.

The machine tool comprises a machining carriage 1 that is movable along an upright M of the machine tool. The carriage 1 supports a slide 2, called also ram, which is movable with respect to the carriage 1 along a direction X that is perpendicular to said upright M. The ram 2 supports a boring bar 3, that is movable with respect to the ram 2 along said direction X. To the boring bar the spindle is fitted to which a machining tool 4 is fixed with which machining by removal of chips on a workpiece 5 is performed, said machining tool 4 being rotatable around a rotation axis A, parallel to said direction X.

In order to suppress the phenomenon of chatter, during machining of the workpiece 5, the ram 2 and the boring bar 3 are moved in opposite ways along the direction X so that the movements of the ram 2 and the boring bar 3 are specular, i.e. they are movements that are the same at the same time, but in opposite ways. If with Δx₁ a first displacement of the ram 2 is indicated and with Δx₂ a second displacement of the boring bar 3 is indicated the relation Δx₁+Δx₂ =0, i.e. Δx₁=-Δx₂ applies.

The movements of the ram 2 and of the boring bar 3 determine a variation of the stiffness of the system between a minimum stiffness configuration, illustrated in Figure 1 and a maximum stiffness configuration, illustrated in Figure 2

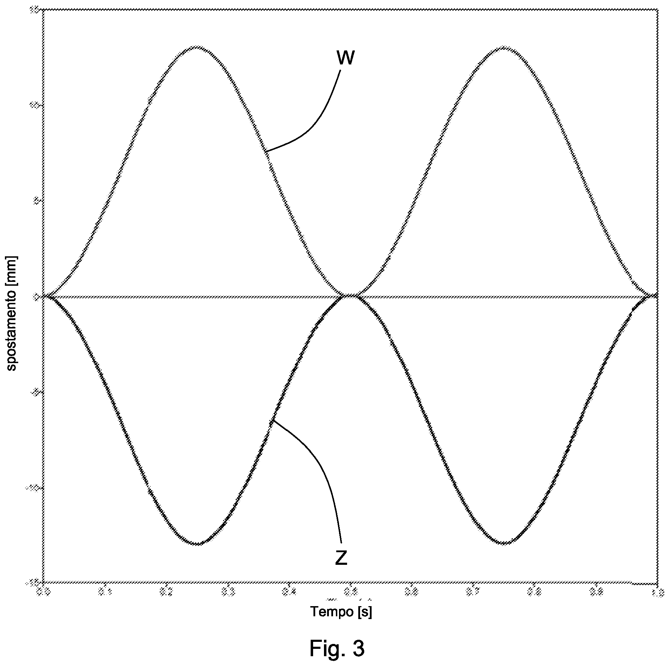

As it is not possible to obtain a step law of motion because of the inertia of the axes, because of the limited jerk values, i.e. because of the derivative of the acceleration, of acceleration and speed of the drives and because the components of the machine would be seriously stressed, inducing vibrations, an approximately sinusoidal motion law was chosen, which was obtained with a square wave variation of the jerk, shown in Figure 3.

In Figure 3, the curve marked by the letter W is the motion law of the ram 2, whereas the curve marked by the letter Z is the motion law of the boring bar 3. In first approximation, if the neighbourhood of a point along one of the curves is considered, the stiffness of the machine varies almost linearly with the position of the ram 2 and of the boring bar 3 along the direction X.

A typical value of the amplitude of the first displacement Δx₁ and of the second displacement Δx₂ is comprised between about 25 and about 150 mm, in a time that varies between 0.2 s and 1 s, i.e. at a frequency comprised between 1 Hz and 5 Hz. This means that this method for suppressing chatter is usable in machining tasks at a contact frequency between the cutting edges of the tool 4 and the workpiece 5 comprised, indicatively, between 20 Hz and 40 Hz.

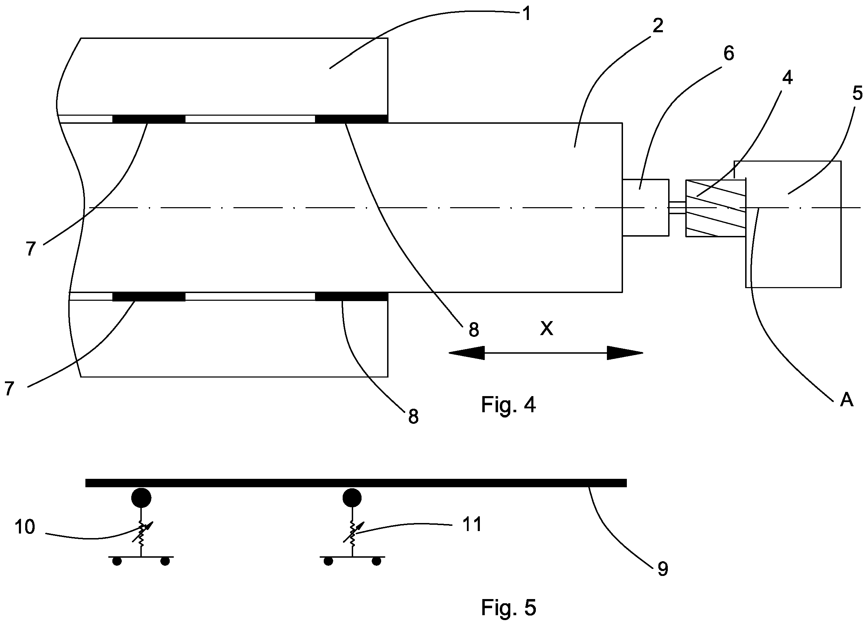

In Figures 4 to 8 a second embodiment is illustrated of the present invention that is applied to a machine tool in which a machining tool 4 is fitted to a spindle 6 that is in turn fixed to a ram 2, which is movable along a direction X, inside a machining carriage 1. The machine tool 4 is rotatable around a rotation axis A parallel to said direction X. The ram 2 is movable with respect to the machining carriage 1 on at least one pair of hydrostatic shoe bearings 7, 8, supplied by a pressurized fluid.

The ram 2 with the hydrostatic shoe bearings 7, 8 is schematizable as a prismatic beam 9, supported by two yielding supports 10 and 11, with variable stiffness (see figure 5).

The stiffness of hydrostatic shoe bearings 7, 8 can be varied by modifying the pressure of the fluid that supplies the hydrostatic shoe bearings.

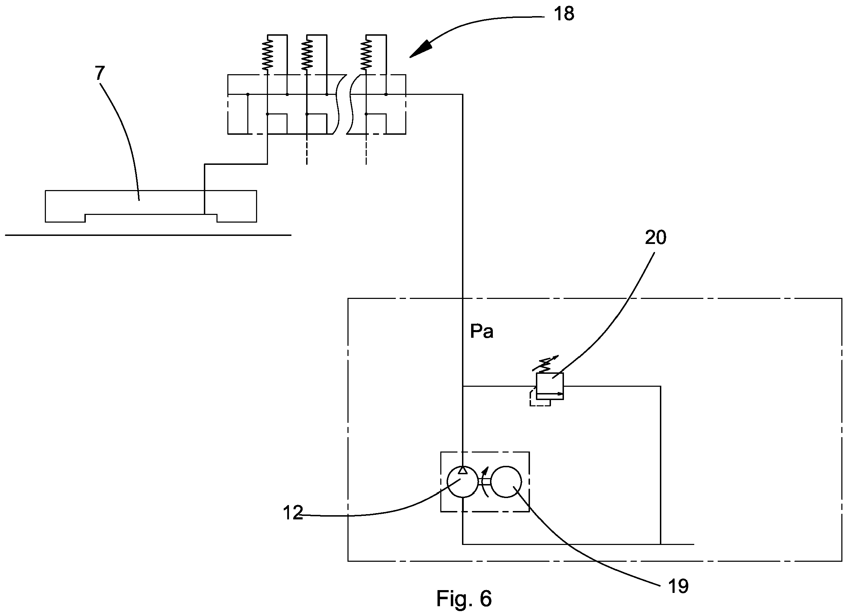

In Figure 6, a first mode of varying the pressure of the fluid that supplies the hydrostatic shoe bearings is illustrated schematically.

In Figure 6, a hydrostatic shoe bearing 7 is shown schematically that is supplied by a pump 12 through a block of capillary resistances 18 of the supply circuit of hydrostatic shoe bearings. The pump 12 is driven by a motor 19. The delivery pressure Pa of the pump 12 is adjusted by a maximum pressure valve 20. This valve can be controlled proportionally or by steps.

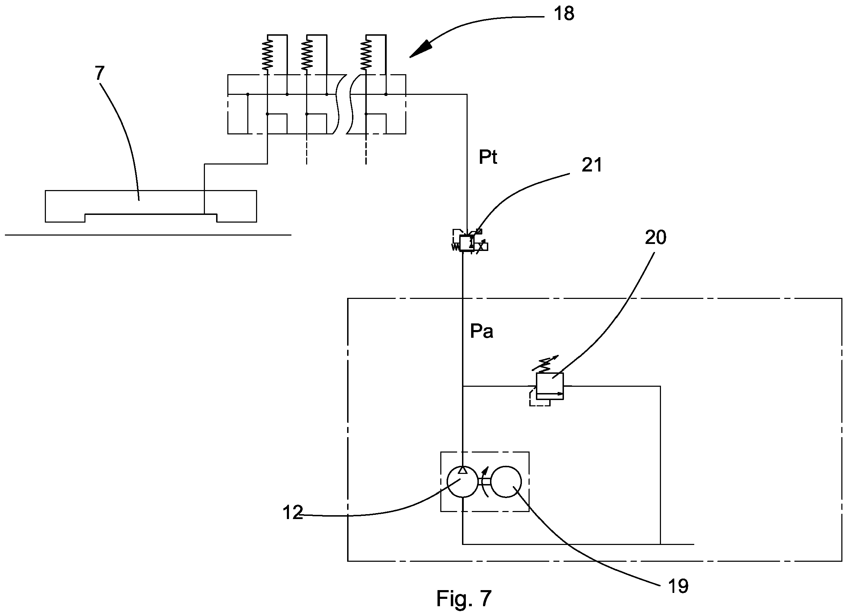

If it is not possible to vary the supply pressure of the entire hydrostatic plant, but it is desired to vary only the pressure of some shoe bearings, the diagram of Figure 7 is used. In Figure 7, a hydrostatic shoe bearing 7 is shown schematically that is supplied by a pump 12 through a block of capillary resistances 18 of the supply circuit of the hydrostatic shoe bearings. The pump 12 is driven by a motor 19. The delivery pressure Pa of the pump 12 is maintained constant by a maximum pressure valve 20 associated with the pump 12. At the outlet of the pump 12, a pressure-reducing valve 21 is provided, by means of which, proportionally or by steps, the pressure Pt is adjusted of the fluid that is sent to the hydrostatic shoe bearings.

By controlling appropriately the pressure-reducing valve 21, it is possible to obtain a set stiffness variation function.

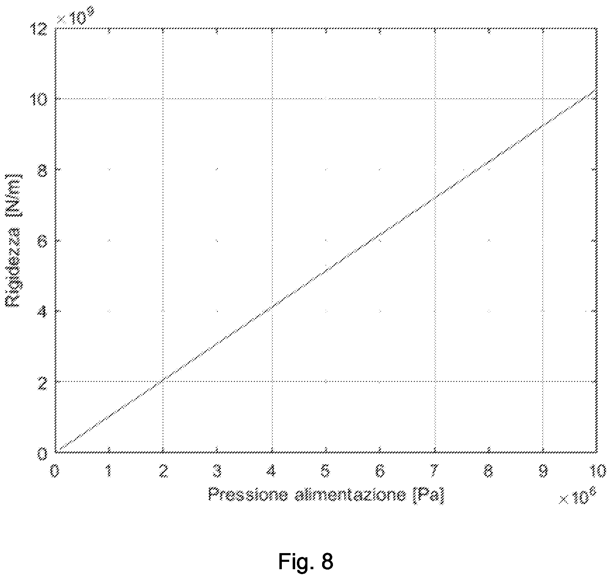

The relation between the value of the supply pressure and the stiffness of hydrostatic shoe bearings 7, 8 is shown in Figure 8, from which it is seen that the stiffness of two opposite hydrostatic shoe bearings and which are not subjected to outside loads is linearly dependent on supply pressure, so it is well controllable.

The constraints on the law of variation of the stiffness are linked to the drive dynamics of the proportional valve and to the dynamics of the supply hydraulic circuit. It is possible to manage to obtain a law of variation of the stiffness that approximates a step variation, that has tilted stiffness increase and reduction ramps and transitions that are less sudden than in the ideal step function.

With the technique of varying the stiffness of hydrostatic shoe bearings that is disclosed above it is possible to obtain a variation in stiffness of 5-10%, with a relatively high frequency of variation of the stiffness, up to about 50Hz.

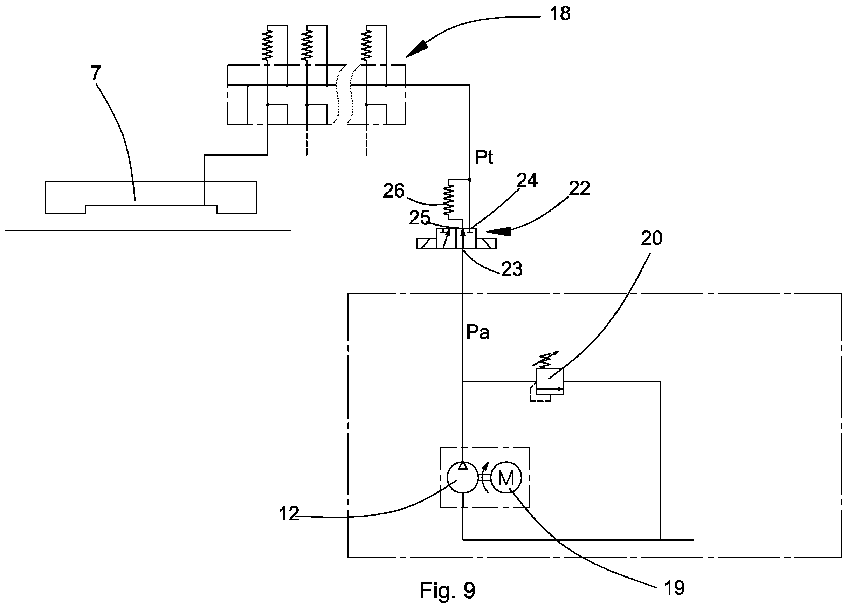

In Figure 9, a second mode of varying the pressure of the fluid that supplies the hydrostatic shoe bearings is illustrated schematically.

In this case, instead of the pressure-reducing valve 21, a three-way valve 22 is provided, with an inlet 23 connected to the delivery of the pump 12, a first outlet 24 connected directly to the supply circuit of the hydrostatic shoe bearings and a second outlet 25 connected to the supply circuit of the hydrostatic shoe bearings by a hydraulic resistance 26 that when traversed by the fluid that supplies the hydrostatic shoe bearings, generates a pressure drop Δp.

By switching the three-way valve so as to send the pressurized fluid coming from the pump 12 to the first outlet 24 or to the second outlet 25, the pressure Pt can be varied at the inlet of the supply circuit of the hydrostatic shoe bearings between the value Pa of the delivery pressure of the pump and a value Pa-Δp. In this manner, a function can be obtained for varying the stiffness of hydrostatic shoe bearings that approximates a step function.

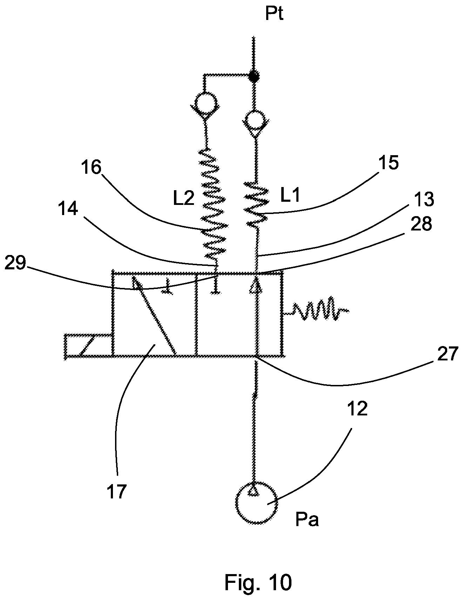

In Figures 10 to 12, a third embodiment of the present invention is illustrated in which the stiffness of hydrostatic shoe bearings is varied by modifying the capillary resistance of the circuit that supplies the hydrostatic shoe bearings 7, 8.

One example of modification of the capillary resistance is illustrated in Figure 10. The modification of the capillary resistance can be obtained by supplying the hydrostatic shoe bearings 7, 8 by a first branch of supply circuit 13 comprising a first capillary resistance 15 of a length L1, or by a second branch of supply circuit 14 arranged parallel to the first branch of supply circuit 13 and comprising a second capillary resistance 16 of a length L2>L1. The first branch of supply circuit 13 and the second branch of supply circuit 14 are supplied by the supplying pump 12 at constant pressure. Between the supplying pump 12 and the two branches of supply circuit 13, 14 a three-way valve 17 is inserted with an inlet 27 connected to the delivery of the pump 12, a first outlet 28 connected to the first branch of supply circuit 13 and a second outlet 29 connected to the second branch of supply circuit 14. By switching the three-way valve 17, the delivery of the pump 12 can be connected to the first branch of supply circuit 13, or to the second branch of supply circuit 14, alternatively. By driving the three-way valve at a preset switching frequency, periodic variation of the pressure of the fluid that supplies the hydrostatic shoe bearings is obtained and, consequently, periodic variation of the stiffness of hydrostatic shoe bearings between two discrete values. Switching frequency means the frequency at which the three-way valve 15 connects alternatively the supplying pump 12 to the first branch of supply circuit 13 and to the second branch of supply circuit 14.

Also in this case it is possible to manage to obtain a law of variation of the stiffness that is approximately a step law of variation, that has tilted stiffness increase and reduction ramps and transitions that are less sudden than in the ideal step function.

With this technique of varying the stiffness of hydrostatic shoe bearings, it is possible to obtain a variation of stiffness of the order of 5-10%, with a medium low frequency of variation up to about 10Hz.

With regard to the lengths L1 and L2 of the capillary resistances, choosing for L1 a value up to about 500 mm and for L2 a value up to about 4000 mm can be hypothesized. These values are approximate and depend on the type of machine, because they are influenced by the mass thereof, by the supply pressure of the hydrostatic plant and by many other parameters.

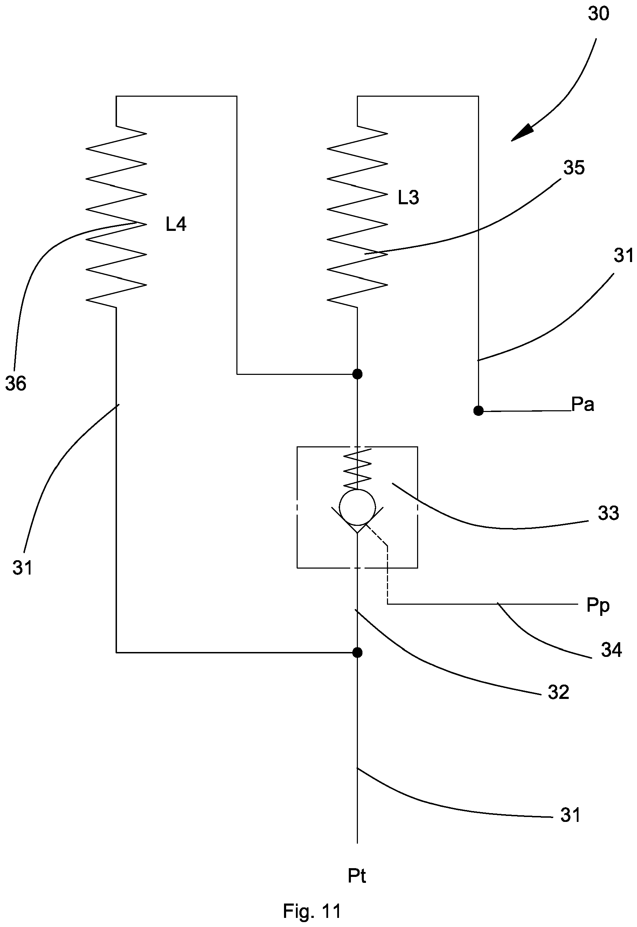

In Figure 11, a further embodiment is illustrated schematically of modification of the stiffness of hydrostatic shoe bearings 7, 8 by varying the capillary resistance of the circuit supplying the hydrostatic shoe bearings 7, 8.

In the embodiment in Figure 11, the hydrostatic shoe bearings are supplied through a supply circuit 30 supplied in turn by the pump 12 at constant delivery pressure Pa. The supply circuit 30 comprises a first branch 31 of supply circuit, that has a first capillary resistance 35 having a length L3 and a second capillary resistance 36 having a length L4, arranged in series, and a second branch 32 of supply circuit, by means of which it is possible to exclude the second capillary resistance 36 from the supply circuit 30. The second branch 32 of supply circuit is provided with a normally closed non-return valve 33, which can be opened by a pressure signal Pp sent to the valve 33 through a pilot circuit 34. Sending the pressure signal Pp causes the non-return valve 33 to be opened so that the pressurized fluid that supplies the hydrostatic shoe bearings passes through the second supply branch 32 without passing through the second capillary resistance 36.

Driving the non-return valve 33 at a set drive frequency, periodic variation can be obtained of the length of the capillary resistance of the supply circuit 30 of hydrostatic shoe bearings between two discrete values, i.e. between a value L3+L4, when the non-return valve 33 is closed and a value L3, when the non-return valve is open.

The periodic variation of the length of the capillary resistance of the supply circuit 30 involves a periodic variation of the pocket pressure of the hydrostatic shoe bearings and, consequently, a periodic variation of the stiffness of the hydrostatic shoe bearings between two discrete values.

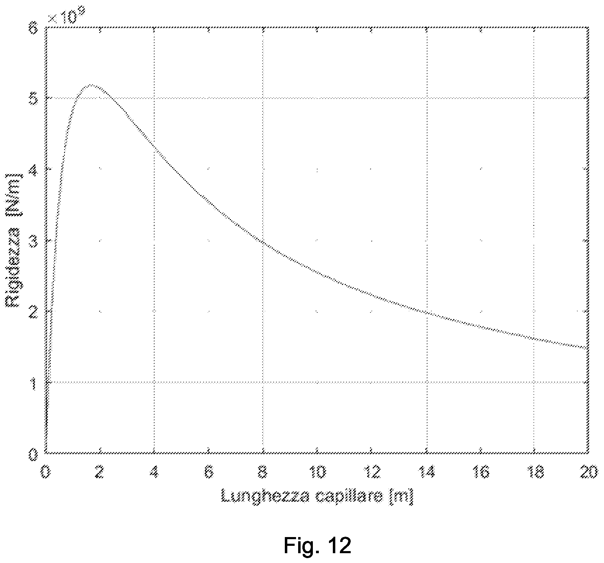

The relation between the stiffness of hydrostatic shoe bearings 7, 8 and the length of a capillary resistance is not linear, as can be seen in the graphic of Figure 12 that shows the variation in stiffness in function of the length of the capillary resistance. The stiffness rapidly increases up to a maximum for low values of the length of the capillary resistance in order to then diminish progressively with a further increase of the length of the capillary resistance.

Another method of variation of the capillary resistance, which is not illustrated, provides for the use of an actuator, for example of piezoelectric type, which drives a plug, for example tapered, configured so as to occlude in a variable manner the passage section of the fluid that supplies the hydrostatic shoe bearings, thus varying the capillary resistance of the supply circuit of the shoe bearings.

The periodic and continuous variation techniques of the dynamics of a machine tool according to the present invention enable machine productivity to be increased in particular during the roughing step. The interpolation technique of two parallel axes and varying the hydrostatic stiffness by modulation of the supply pressure and variation of the capillary resistance have different dynamics, so that combined use of the aforesaid techniques is conceivable, in order to maximize the stabilization effect in a milling machining.

## Claims

1. Method for suppressing the phenomenon of chatter in a machine tool during machining of a workpiece (5), said machine tool comprising a machining carriage (1) that supports a ram (2) that is movable with respect to the carriage (1) in a direction (X), a boring bar (3) supported by said ram (2) and movable with respect to said ram (2) along said direction (X), a machining tool (4) rotated around a rotation axis (A) by a spindle supported by the boring bar (3), **characterized in that**, whilst the machining tool (4) performs a machining task on said workpiece (5), the ram (2) and the boring bar (3) are moved in opposite ways along said direction (X), such that a displacement Δx₁ of said ram (2) in said direction (X) is equal and contrary to a displacement Δx₂ of said boring bar (3) in said direction (X), being Δx₁ + Δx₂=0.

2. Method according to claim 1, wherein the displacement Δx₁ of the ram (2) and the displacement Δx₂ of the boring bar (3) occur with an approximately sinusoidal law of motion and/or wherein the displacement Δx₁ of the ram (2) and the displacement Δx₂ of the boring bar (3) have an amplitude comprised between 25 mm and 150 mm.

3. Method according to one of the preceding claims, wherein the displacement speed of said ram (2) in said direction (X) is, instant by instant, equal and contrary to the displacement speed of said boring bar (3) in said direction (X).

4. Method according to claim 3, wherein said first displacement Δx₁ and said second displacement Δx₂ occur at a frequency comprised between 1 Hz and 5 Hz.

5. Method according to one of the preceding claims, wherein said method is used in machining tasks in which a cutting frequency on said workpiece (5) of teeth of a cutting edge of the tool (4) is comprised between 20 Hz and 40 Hz.

6. Method for suppressing the phenomenon of chatter in a machine tool during machining of a workpiece (5), said machine tool comprising a machining carriage (1) that supports a ram (2) that is movable with respect to the carriage (1) in a direction (X), a machining tool (4) rotated around a rotation axis (A) by a spindle (6) supported by said ram (2), said ram (2) being supported by said machining carriage by hydrostatic shoe bearings (7, 8), said hydrostatic shoe bearings being supplied with a pressurized liquid by a supply pump (12), wherein during machining of said workpiece (5) stiffness of said hydrostatic shoe bearings is varied by varying the supply pressure of said pressurized liquid, **characterized in that** said stiffness is varied according to a preset law of periodic variation.

7. Method according to claim 6, wherein the supply pressure of said pressurized liquid is varied by adjusting the delivery pressure Pa of the pump (12) by a maximum pressure valve (20), that can be controlled proportionally or by steps, or wherein the supply pressure of said pressurized liquid is varied proportionally or by steps, by a pressure-reducing valve (21) interposed between said supply pump (12) and a block (18) of capillary resistances of the supply circuit supplying said fluid to said hydrostatic shoe bearings (7, 8), or wherein between said supply pump (12) and said hydrostatic shoe bearings (7, 8) a three-way valve (22) is interposed, with an inlet (23) connected to the delivery of the pump (12), a first outlet (24) connected directly to the supply circuit of the hydrostatic shoe bearings (7, 8) and a second outlet (25) connected to the supply circuit of the hydrostatic shoe bearings by a hydraulic resistance (26) that is suitable for generating a pressure drop Δp in said supply circuit.

8. Method according to claim 7, wherein said supply pressure is varied by piloting said maximum pressure valve (20) so as to obtain a law of periodic variation of the supply pressure that is the same as said law of periodic variation of the stiffness of the hydrostatic shoe bearings (7, 8), or wherein said supply pressure is varied by piloting said pressure-reducing valve (21) so as to obtain a law of periodic variation of the supply pressure that is the same as said law of periodic variation of the stiffness of the hydrostatic shoe bearings (7, 8), or wherein said supply pressure is varied by piloting said three-way valve (22) so as to obtain a law of periodic variation of the supply pressure that is the same as said law of periodic variation of the stiffness of the hydrostatic shoe bearings (7, 8).

9. Method according to one of claims 6 to 8, wherein said stiffness is varied periodically at a frequency up to 50 Hz.

10. Method for suppressing the phenomenon of chatter in a machine tool during machining of a workpiece (5), said machine tool comprising a machining carriage (1) that supports a ram (2) that is movable with respect to the carriage (1) in a direction (X), a machining tool (4) rotated around a rotation axis (A) by a spindle (6) supported by said ram (2), said ram (2) being supported by said machining carriage by hydrostatic shoe bearings (7, 8), said hydrostatic shoe bearings being supplied with a pressurized liquid by a supply pump (12), **characterized in that** said pressurized liquid is supplied to said hydrostatic shoe bearings alternatively through a first branch (13, 31) of supply circuit, or a second branch of supply circuit (14; 32), said first branch of supply circuit and said second branch of supply circuit having capillary resistances of different length.

11. Method according to claim 10, wherein between said supply pump and said first branch of supply circuit (13) and second branch of supply circuit (14) a three-way valve (17) is interposed that supplies alternatively said first branch of supply circuit (13) and said second branch of supply circuit (14).

12. Method according to claim 11, wherein said three-way valve (17) is driven at a preset switching frequency, up to 10 Hz.

13. Method according to one of claims 10 to 12, wherein said first branch of supply circuit (13) comprises a first capillary resistance (15) with a length L1 up to about 500 mm and/or wherein said second branch of supply circuit (14) comprises a second capillary resistance (16) with a length L2 up to about 4000 mm.

14. Method according to claim 10, wherein said first branch of supply circuit (31) comprises a first capillary resistance (35) and a second capillary resistance (36).

15. Method according to claim 14, wherein said second branch of supply circuit (32) comprises said first capillary resistance (35).

16. Method according to claim 15, wherein said second branch of supply circuit (32) comprises a non-return valve (33) that is drivable by a pressure signal (Pp).

17. Method according to claim 16, wherein driving said non-return valve, said pressurized fluid passes only through said second branch (32) of supply circuit, without passing through said second capillary resistance (36).

## Patentansprüche

1. Verfahren zum Unterdrücken des Phänomens des Ratterns in einer Werkzeugmaschine während der Bearbeitung eines Werkstücks (5), die Werkzeugmaschine einen Bearbeitungsschlitten (1) umfassend, der einen Stößel (2) stützt, der in Bezug auf den Schlitten (1) in einer Richtung (X) beweglich ist, eine Bohrstange (3), die von dem Stößel (2) getragen wird und in Bezug auf den Stößel (2) entlang der Richtung (X) beweglich ist, ein Bearbeitungswerkzeug (4), das durch eine von der Bohrstange (3) getragene Spindel um eine Drehachse (A) gedreht wird, **dadurch gekennzeichnet, dass,** während das Bearbeitungswerkzeug (4) eine Bearbeitungsaufgabe an dem Werkstück (5) durchführt, der Stößel (2) und die Bohrstange (3) in entgegengesetzte Richtungen entlang der Richtung (X) bewegt werden, so dass eine Verschiebung Δx₁ des Stößels (2) in der Richtung (X) gleich und entgegengesetzt zu einer Verschiebung Δx₂ der Bohrstange (3) in der Richtung (X) ist, wobei Δx₁ + Δx₂ = 0 ist.

2. Verfahren nach Anspruch 1, wobei die Verschiebung Δx₁ des Stößels (2) und die Verschiebung Δx₂ der Bohrstange (3) mit einem annähernd sinusförmigen Bewegungsgesetz erfolgt und/oder wobei die Verschiebung Δx₁ des Stößels (2) und die Verschiebung Δx₂ der Bohrstange (3) eine Amplitude zwischen 25 mm und 150 mm aufweisen.

3. Verfahren nach einem der vorhergehenden Ansprüche, wobei die Verschiebegeschwindigkeit des Stößels (2) in der Richtung (X) von Moment zu Moment gleich und entgegengesetzt zur Verschiebungsgeschwindigkeit der Bohrstange (3) in der Richtung (X) ist.

4. Verfahren gemäß Anspruch 3, wobei die erste Verschiebung Δx₁ und die zweite Verschiebung Δx₂ bei einer Frequenz zwischen 1 Hz und 5 Hz erfolgen.

5. Verfahren nach einem der vorhergehenden Ansprüche, wobei das Verfahren bei Bearbeitungsaufgaben eingesetzt wird, bei denen eine Schnittfrequenz der Zähne einer Schneide des Werkzeugs (4) am Werkstück (5) zwischen 20 Hz und 40 Hz liegt.

6. Verfahren zum Unterdrücken des Phänomens des Ratterns in einer Werkzeugmaschine während der Bearbeitung eines Werkstücks (5), wobei die Werkzeugmaschine einen Bearbeitungsschlitten (1) umfasst, der einen Stößel (2) trägt, der in Bezug auf den Schlitten (1) in einer Richtung (X) beweglich ist, ein Bearbeitungswerkzeug (4), das um eine Rotationsachse (A) gedreht wird von einer Spindel (6), die von dem Stößel (2) gestützt wird, wobei der Stößel (2) durch hydrostatische Schuhlager (7, 8) von dem Bearbeitungsschlitten getragen wird, wobei die hydrostatischen Schuhlager von einer Versorgungspumpe (12) mit einer unter Druck stehenden Flüssigkeit versorgt werden, wobei während der Bearbeitung des Werkstücks (5) die Steifigkeit der hydrostatischen Schuhlager durch Variation des Versorgungsdrucks der unter Druck stehenden Flüssigkeit variiert wird, **dadurch gekennzeichnet, dass** die Steifigkeit gemäß einem voreingestellten Gesetz der periodischen Variation variiert wird.

7. Verfahren nach Anspruch 6, wobei der Versorgungsdruck der unter Druck stehenden Flüssigkeit durch Einstellen des Förderdrucks Pa der Pumpe (12) über ein Maximaldruckventil (20) variiert wird, das proportional oder nach schritten gesteuert werden kann, oder wobei der Versorgungsdruck der unter Druck stehenden Flüssigkeit proportional oder nach schritten variiert wird durch ein Druckminderventil (21), das zwischen der Versorgungspumpe (12) und einem Kapillarwiderstandsblock (18) des Versorgungskreislaufs angeordnet ist, der die Flüssigkeit den hydrostatischen Schuhlagern (7, 8) zuführt, oder wobei zwischen der Versorgungspumpe (12) und den hydrostatischen Schuhlagern (7, 8) ein Dreiwegeventil (22) zwischengeschaltet ist, mit einem Einlass (23), der mit der Förderung der Pumpe (12) verbunden ist, einem ersten Auslass (24), der direkt mit dem Versorgungskreislauf der hydrostatischen Schuhlager (7, 8) verbunden ist, und einem zweiten Auslass (25), der mit dem Versorgungskreislauf der hydrostatischen Schuhlager durch einen hydraulischen Widerstand (26) verbunden ist, der geeignet ist, in dem Versorgungskreislauf einen Druckabfall Δp zu erzeugen.

8. Verfahren nach Anspruch 7, wobei der Versorgungsdruck durch Steuern des Maximaldruckventils (20) variiert wird, um ein Gesetz der periodischen Variation des Versorgungsdrucks zu erhalten, das dasselbe ist wie das Gesetz der periodischen Variation der Steifigkeit der hydrostatischen Schuhlager (7, 8), oder wobei der Versorgungsdruck durch Steuern des Druckminderventils (21) so gesteuert wird, dass ein Gesetz der periodischen Variation des Versorgungsdrucks erhalten wird, das dasselbe ist wie das Gesetz der periodischen Variation der Steifigkeit der hydrostatischen Schuhlager (7, 8), oder wobei der Versorgungsdruck durch Steuern des Dreiwegeventils (22) so gesteuert wird, dass ein Gesetz der periodischen Variation des Versorgungsdrucks erhalten wird, das dasselbe ist wie das Gesetz der periodischen Variation der Steifigkeit der hydrostatischen Schuhlager (7, 8).

9. Verfahren nach einem der Ansprüche 6 bis 8, wobei die Steifigkeit periodisch mit einer Frequenz von bis zu 50 Hz variiert wird.

10. Verfahren zum Unterdrücken des Phänomens des Ratterns in einer Werkzeugmaschine während der Bearbeitung eines Werkstücks (5), wobei die Werkzeugmaschine einen Bearbeitungsschlitten (1) umfasst, der einen Stößel (2) trägt, der in Bezug auf den Schlitten (1) in einer Richtung (X) beweglich ist, ein Bearbeitungswerkzeug (4), das um eine Rotationsachse (A) gedreht wird von einer Spindel (6), die von dem Stößel (2) gestützt wird, wobei der Stößel (2) durch den Bearbeitungsschlitten durch hydrostatische Schuhlager (7, 8) gestützt wird, wobei die hydrostatischen Schuhlager durch eine Versorgungspumpe (12) mit einer unter Druck stehenden Flüssigkeit versorgt werden, **dadurch gekennzeichnet, dass** die unter Druck stehende Flüssigkeit den hydrostatischen Schuhlagern alternativ durch einen ersten Zweig (13, 31) des Versorgungskreislaufs oder einen zweiten Zweig des Versorgungskreislaufs (14, 32) zugeführt wird, wobei der erste Zweig des Versorgungskreislaufs und der zweite Zweig des Versorgungskreislaufs Kapillarwiderstände unterschiedlicher Länge aufweisen.

11. Verfahren nach Anspruch 10, wobei zwischen der Versorgungspumpe und dem ersten Zweig des Versorgungskreislaufs (13) und dem zweiten Zweig des Versorgungskreislaufs (14) ein Dreiwegeventil (17) zwischengeschaltet ist, das abwechselnd den ersten Zweig des Versorgungskreislaufs (13) und den zweiten Zweig des Versorgungsstromkreises (14) versorgt.

12. Verfahren nach Anspruch 11, wobei das Dreiwegeventil (17) mit einer voreingestellten Schaltfrequenz von bis zu 10 Hz angetrieben wird.

13. Verfahren nach einem der Ansprüche 10 bis 12, wobei der erste Zweig der Versorgungsstromkreises einen ersten Kapillarwiderstand (15) mit einer Länge L1 bis zu etwa 500 mm umfasst und/oder wobei der zweite Zweig des Versorgungsstromkreises (14) einen zweiten Kapillarwiderstand (16) mit einer Länge L2 bis zu etwa 4000 mm umfasst.

14. Verfahren gemäß Anspruch 10, wobei der erste Zweig des Versorgungsstromkreises (31) einen ersten Kapillarwiderstand (35) und einen zweiten Kapillarwiderstand (36) umfasst.

15. Verfahren gemäß Anspruch 14, wobei der zweite Zweig des Versorgungsstromkreises (32) den ersten Kapillarwiderstand (35) umfasst.

16. Verfahren nach Anspruch 15, wobei der zweite Zweig des Versorgungskreislaufs (32) ein Rückschlagventil (33) umfasst, das durch ein Drucksignal (Pp) ansteuerbar ist.

17. Verfahren nach Anspruch 16, wobei durch Antreiben des Rückschlagventils die unter Druck stehende Flüssigkeit nur durch den zweiten Zweig (32) des Versorgungskreislaufs fließt, ohne den zweiten Kapillarwiderstand (36) zu passieren.

## Revendications

1. Procédé de suppression du phénomène de broutage dans une machine-outil pendant l'usinage d'une pièce (5), ladite machine-outil comprenant un chariot d'usinage (1) qui supporte un coulisseau (2) mobile par rapport au chariot (1) dans une direction (X), une barre d'alésage (3) supportée par ledit coulisseau (2) et mobile par rapport audit coulisseau (2) le long de ladite direction (X), un outil d'usinage (4) mis en rotation autour d'un axe de rotation (A) par une broche supportée par la barre d'alésage (3), **caractérisé en ce que,** pendant que l'outil d'usinage (4) effectue une tâche d'usinage sur ladite pièce (5), le coulisseau (2) et la barre d'alésage (3) sont déplacés en sens inverse le long de ladite direction (X), de telle sorte qu'un déplacement Δx₁ dudit coulisseau (2) dans ladite direction (X) est égal et contraire à un déplacement Δx₂ de ladite barre d'alésage (3) dans ladite direction (X), soit Δx₁ + Δx₂ = 0.

2. Procédé selon la revendication 1, dans lequel le déplacement Δx₁ du coulisseau (2) et le déplacement Δx₂ de la barre d'alésage (3) se produit avec une loi de mouvement approximativement sinusoïdale et/ou dans lequel le déplacement Δx₁ du coulisseau (2) et le déplacement Δx₂ de la barre d'alésage (3) ont une amplitude comprise entre 25 mm et 150 mm.

3. Procédé selon l'une des revendications précédentes, dans lequel la vitesse de déplacement dudit coulisseau (2) dans ladite direction (X) est, instant après instant, égale et contraire à la vitesse de déplacement de ladite barre d'alésage (3) dans ladite direction (X).

4. Procédé selon la revendication 3, dans lequel ledit premier déplacement Δx₁ et ledit second déplacement Δx₂ se produisent à une fréquence comprise entre 1 Hz et 5 Hz.

5. Procédé selon l'une des revendications précédentes, dans lequel ledit procédé est utilisé dans des tâches d'usinage dans lesquelles une fréquence de coupe sur ladite pièce (5) des dents d'une arête de coupe de l'outil (4) est comprise entre 20 Hz et 40 Hz.

6. Procédé de suppression du phénomène de broutage dans une machine-outil lors de l'usinage d'une pièce (5), ladite machine-outil comprenant un chariot d'usinage (1) supportant un coulisseau (2) mobile par rapport au chariot (1) dans une direction (X), un outil d'usinage (4) mis en rotation autour d'un axe de rotation (A) par une broche (6) supportée par ledit coulisseau (2), ledit coulisseau (2) étant supporté par ledit chariot d'usinage par des paliers à patins hydrostatiques (7, 8), lesdits paliers à patins hydrostatiques étant alimentés en liquide pressurisé par une pompe d'alimentation (12), dans lequel, pendant l'usinage de ladite pièce (5), la rigidité desdits paliers à patins hydrostatiques est modifiée en modifiant la pression d'alimentation dudit liquide pressurisé, **caractérisé en ce que** ladite rigidité est modifiée selon une loi prédéfinie de variation périodique.

7. Procédé selon la revendication 6, dans lequel la pression d'alimentation dudit liquide pressurisé est modifiée en ajustant la pression de refoulement Pa de la pompe (12) par une soupape de pression maximale (20), qui peut être commandée proportionnellement ou par étapes, ou dans lequel la pression d'alimentation dudit liquide pressurisé est modifiée proportionnellement ou par étapes, par un réducteur de pression (21) interposé entre ladite pompe d'alimentation (12) et un bloc (18) de résistances capillaires du circuit d'alimentation alimentant ledit fluide auxdits paliers à patins hydrostatiques (7, 8), ou dans lequel entre ladite pompe d'alimentation (12) et lesdits paliers à patins hydrostatiques (7, 8), une soupape à trois voies (22) est interposée, avec une entrée (23) reliée au refoulement de la pompe (12), une première sortie (24) reliée directement au circuit d'alimentation des paliers à patins hydrostatiques (7, 8) et une seconde sortie (25) reliée au circuit d'alimentation des paliers à patins hydrostatiques par une résistance hydraulique (26) apte à générer une chute de pression Δp dans ledit circuit d'alimentation.

8. Procédé selon la revendication 7, dans lequel ladite pression d'alimentation est modifiée en pilotant ladite soupape de pression maximale (20) de manière à obtenir une loi d'écart périodique de la pression d'alimentation identique à ladite loi d'écart périodique de la rigidité des paliers à patins hydrostatiques (7, 8), ou dans lequel ladite pression d'alimentation est modifiée en pilotant ledit réducteur de pression (21) de manière à obtenir une loi d'écart périodique de la pression d'alimentation identique à ladite loi d'écart périodique de la rigidité des paliers à patins hydrostatiques (7, 8), ou dans lequel ladite pression d'alimentation est modifiée en pilotant ladite soupape à trois voies (22) de manière à obtenir une loi d'écart périodique de la pression d'alimentation identique à ladite loi d'écart périodique de la rigidité des paliers à patins hydrostatiques (7, 8).

9. Procédé selon l'une des revendications 6 à 8, dans lequel ladite rigidité est modifiée périodiquement à une fréquence allant jusqu'à 50 Hz.

10. Procédé de suppression du phénomène de broutage dans une machine-outil lors de l'usinage d'une pièce (5), ladite machine-outil comprenant un chariot d'usinage (1) supportant un coulisseau (2) mobile par rapport au chariot (1) dans une direction (X), un outil d'usinage (4) mis en rotation autour d'un axe de rotation (A) par une broche (6) supportée par ledit coulisseau (2), ledit coulisseau (2) étant supporté par ledit chariot d'usinage par des paliers à patins hydrostatiques (7, 8), lesdits paliers à patins hydrostatiques étant alimentés en liquide pressurisé par une pompe d'alimentation (12), **caractérisé en ce que** ledit liquide pressurisé est alimenté auxdits paliers à patins hydrostatiques alternativement par une première branche (13, 31) du circuit d'alimentation, ou par une seconde branche du circuit d'alimentation (14 ; 32), ladite première branche du circuit d'alimentation et ladite seconde branche du circuit d'alimentation ayant des résistances capillaires de longueur différente.

11. Procédé selon la revendication 10, dans lequel entre ladite pompe d'alimentation et lesdites première branche du circuit d'alimentation (13) et seconde branche du circuit d'alimentation (14) est interposée une soupape à trois voies (17) qui alimente alternativement ladite première branche du circuit d'alimentation (13) et ladite seconde branche du circuit d'alimentation (14).

12. Procédé selon la revendication 11, dans lequel ladite soupape à trois voies (17) est entraînée à une fréquence de commutation prédéfinie, jusqu'à 10 Hz.

13. Procédé selon l'une des revendications 10 à 12, dans lequel ladite première branche du circuit d'alimentation comprend une première résistance capillaire (15) d'une longueur L1 allant jusqu'à environ 500 mm et/ou dans lequel ladite seconde branche du circuit d'alimentation (14) comprend une seconde résistance capillaire (16) d'une longueur L2 allant jusqu'à environ 4 000 mm.

14. Procédé selon la revendication 10, dans lequel ladite première branche du circuit d'alimentation (31) comprend une première résistance capillaire (35) et une seconde résistance capillaire (36).

15. Procédé selon la revendication 14, dans lequel ladite seconde branche du circuit d'alimentation (32) comprend ladite première résistance capillaire (35).

16. Procédé selon la revendication 15, dans lequel ladite seconde branche du circuit d'alimentation (32) comprend une soupape de non-retour (33) qui peut être entraînée par un signal de pression (Pp).

17. Procédé selon la revendication 16, dans lequel, en entraînant ladite soupape de non-retour, ledit fluide pressurisé passe uniquement par ladite seconde branche (32) du circuit d'alimentation, sans passer par ladite seconde résistance capillaire (36).
